# EUROPÄISCHE PATENTSCHRIFT

(11) **EP 3 503 600 B1**
(45) Veröffentlichungstag und Bekanntmachung des Hinweises auf die Patenterteilung: **12.08.2020**
(21) Anmeldenummer: 17210065.3
(22) Anmeldetag: 22.12.2017
(51) Int. Cl.: H04W 8/02, H04W 8/06, H04W 8/12

(54) **NETZWERKZUGANGS-ENTITÄT UND VERFAHREN ZUM AUFBAUEN EINER ROAMING-VERBINDUNG ÜBER EINE NETZWERKZUGANGS-ENTITÄT**
NETWORK ACCESS ENTITY AND METHOD FOR ESTABLISHING A ROAMING CONNECTION VIA A NETWORK ACCESS ENTITY
ENTITÉ D'ACCÈS AU RÉSEAU ET PROCÉDÉ DESTINÉ AU MONTAGE D'UNE LIAISON D'ITINÉRANCE AU MOYEN D'UNE ENTITÉ D'ACCÈS AU RÉSEAU

(43) Veröffentlichungstag der Anmeldung: 26.06.2019
(73) Patentinhaber: Deutsche Telekom AG, 53113 Bonn (DE)
(72) Erfinder: Lauster, Reinhard, 3100 St. Pölten (AT)
(74) Vertreter: Vossius & Partner Patentanwälte Rechtsanwälte mbB

(56) Entgegenhaltungen:
- WO-A1-2017/051172
- WO-A1-2017/113100
- US-A1- 2015 327 110
- US-A1- 2016 142 969
- Jyrki T. J. Penttinen ET AL: "Data Networks" In: "The Telecommunications Handbook : Engineering Guidelines for Fixed, Mobile and Satellite Systems", 16. Februar 2015 (2015-02-16), John Wiley & Sons, Ltd, Chichester, UK, XP055453539, ISBN: 978-1-119-94488-1 Seiten 165-205, DOI: 10.1002/9781118678916.ch7, * Seite 202 - Seite 203 *
- "3rd Generation Partnership Project; Technical Specification Group Services and System Aspects; Procedures for the 5G System; Stage 2 (Release 15)", 3GPP DRAFT; 23502-200, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 15. Dezember 2017 (2017-12-15), XP051379274, Gefunden im Internet: URL:http://www.3gpp.org/tsg_sa/WG2_Arch/La test_SA2_Specs/Latest_draft_S2_Specs/23502 -200.doc [gefunden am 2017-12-15]
- Cornelia Kappler: "Basic UMTS Functionality" In: "UMTS Networks and Beyond", 12. Mai 2009 (2009-05-12), Wiley, XP055460798, ISBN: 978-0-470-03190-2 Seiten 93-109, DOI: 10.1002/9780470682029, * Seite 95 - Seite 96 *
- ERICSSON ET AL: "Update of Network sharing for 5G", 3GPP DRAFT; S2-179417_9289_8536-5GS-NETSHAREUPDATES_RE V7, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , Bd. SA WG2, Nr. Reno, NV, USA; 20171127 - 20171201 1. Dezember 2017 (2017-12-01), XP051365954, Gefunden im Internet: URL:http://www.3gpp.org/Meetings_3GPP_SYNC /SA2/Docs/S2-179417_9289_8536-5GS-netshare updates_rev7.doc [gefunden am 2017-12-01]
- Deutsche Telekom Ag: "Deutsche Telekom: 5G Federated Network Slicing für globale Reichweite vorgestellt", , 5. Februar 2017 (2017-02-05), XP055453588, Gefunden im Internet: URL:https://www.telekom.com/de/medien/medi eninformationen/detail/5g-federated-networ k-slicing-fuer-globale-reichweite-vorgeste llt-485656 [gefunden am 2018-02-22]

## Beschreibung

Die vorliegende Erfindung betrifft eine Netzwerkzugangs-Entität und ein Verfahren zum Aufbauen einer Roaming-Verbindung über eine Netzwerkzugangs-Entität, insbesondere über ein 5G Kommunikationsnetzwerk und eine Netzwerkzugangs-Entität wie z.B. eine AMF ("Access and Mobility Management Function", Zugangs- und Mobilitätsverwaltungsfunktion) im besuchten PLMN (Public Land Mobile Network bzw. öffentliches terrestrisches Mobilfunknetz) des 5G Kommunikationssystems. Die Erfindung betrifft ferner eine entsprechende Netzwerkzugangs-Entität und ein Kommunikationsendgerät (User Equipment bzw. mobiles Terminal).

Betreiber weltweit bereiten sich derzeit auf den Übergang auf 5G-Netze vor. Um die breite Palette von Diensten zu unterstützen, die für 5G vorgesehen sind, ist ein neues Kernnetzwerk vorgesehen, das unter dem Namen "Next-Generation Core oder NG Core" bekannt ist. Seine Struktur ist beispielsweise in der technischen Spezifikation TS 23.501 (V1.5.0) der 3GPP beschrieben. Sie spezifiziert Anforderungen zum Entwerfen und Betreiben eines serviceorientierten 5G-Kernnetzwerk.

Das serviceorientierte 5G-Core-Netzwerk basiert auf der Prämisse, dass 5G sehr unterschiedliche Dienste mit sehr unterschiedlichen Leistungsanforderungen unterstützen soll. Es werden drei verschiedene Servicekategorien für 5G identifiziert: 1) Enhanced Mobile Broadband (eMBB), 2) massive Maschinentypkommunikation (mMTC, auch bekannt als loT, Internet of Things) und 3) Ultra-zuverlässige Kommunikation mit niedriger Latenz (UR-LLC).

Dies beinhaltet Anwendungsfälle bzw. Use Cases wie industrielle Kontrolle, Augmented Reality (AR) bzw. erweiterte Realität / virtuelle Realität (VR) und vernetzte Autos. Das Ziel ist die Verwendung von Ende-zu-Ende-Netzwerk Slices, um diese verschiedenen Dienstleistungen und Technologien auf eine physische Netzwerkinfrastruktur abzubilden und zu unterstützen. Auf diese Weise können Betreiber neue Dienste in fremden

Netzwerksektoren betreiben und ihre Netzwerke in neue industrielle Wertschöpfungsketten einfügen.

Bei der Inbetriebnahme des Kommunikationsendgeräts, d.h. des mobilen Terminals, des Maschinenterminals wie z.B. des selbstfahrenden Autos oder der Drohne, auch allgemein als User Equipment (UE) bezeichnet, ist derzeit noch eine aufwendige Prozedur notwendig, wenn sich das UE im besuchten Netzwerk bzw. fremden Kommunikationsnetzwerk befindet. Diese Prozedur ist notwendig, um die Subscriber-Daten bzw. Teilnehmerdaten des UEs aus dem Heimatnetzwerk, auch Home PLMN (Public Land Mobile Network bzw. öffentliches terrestrisches Mobilfunknetz) zu holen und dem UE mitzuteilen. Bei diesen Teilnehmerdaten des UEs handelt es sich beispielsweise um Registrierungsdaten des UE, wie Identifikation und Telefonnummer, z.B. IMSI. Ferner werden zur Anmeldung im besuchten Netzwerk, auch als "Visited PLMN" bzw. besuchtes PLMN bezeichnet, Fähigkeiten (Capabilities) des besuchten PLMN, wie z.B. Netzwerktechnologie, Unterstützung bestimmter Dienste, etc. benötigt.

US 2015/327110 A1 betrifft eine Technologie zum Unterstützen mehrerer Paketdatennetz-(PDN-) Verbindungen mit demselben Zugangspunktnamen (APN) in einer Umgebung, in der ein drahtloses LAN verwendet wird, und zum effektiven Übertragen von Daten in einem Roaming-Netzwerk.

WO 2017/113100 A1 betrifft einen ersten Netzwerkknoten, einen zweiten Netzwerkknoten und darin durchgeführte Verfahren zur Kommunikation.

Es ist die Aufgabe der vorliegenden Erfindung, ein Konzept zu schaffen, um die oben genannten Probleme zu lösen, insbesondere die Verbindungsprozedur des UEs im besuchten PLMN zu beschleunigen und damit die Leistungsfähigkeit und Flexibilität der Kommunikation zu steigern, insbesondere beim Roaming in den oben beschriebenen 5G Kommunikationsnetzen.

Diese Aufgabe wird durch die Merkmale der unabhängigen Ansprüche gelöst. Vorteilhafte Weiterbildungsformen sind Gegenstand der abhängigen Ansprüche.

Die im Folgenden vorgestellten Verfahren und Systeme können von verschiedener Art sein. Die einzelnen beschriebenen Elemente können durch Hardware- oder Softwarekomponenten realisiert sein, beispielsweise elektronische Komponenten, die durch verschiedene Technologien hergestellt werden können und zum Beispiel Halbleiterchips, ASICs, Mikroprozessoren, digitale Signalprozessoren, integrierte elektrische Schaltungen, elektrooptische Schaltungen und/oder passive Bauelemente umfassen.

Die im Folgenden vorgestellten Geräte, Systeme und Verfahren sind dafür geeignet, Informationen über ein Kommunikationsnetzwerk zu übertragen. Der Begriff Kommunikationsnetzwerk oder Kommunikationsnetz bezeichnet dabei die technische Infrastruktur, auf der die Übertragung von Signalen stattfindet. Das Kommunikationsnetz umfasst im Wesentlichen das Vermittlungsnetz, in dem die Übertragung und Vermittlung der Signale zwischen den ortsfesten Einrichtungen und Plattformen des Mobilfunknetzes oder Festnetzes stattfinden, sowie das Zugangsnetz, in dem die Übertragung der Signale zwischen einer Netzwerkzugangseinrichtung und dem Kommunikationsendgerät stattfindet. Das Kommunikationsnetz kann hierbei sowohl Komponenten eines Mobilfunknetzes als auch Komponenten eines Festnetzes umfassen. Im Mobilfunknetz wird das Zugangsnetz auch als Luftschnittstelle bezeichnet und umfasst beispielsweise eine Basisstation (NodeB, eNodeB, Funkzelle) mit Mobilfunkantenne, um die Kommunikation zu einem Kommunikationsendgerät wie oben beschrieben, beispielsweise einem Mobiltelefon bzw. Smartphone oder einer mobilen Einrichtung mit Mobilfunkadapter oder einem Maschinenterminal aufzubauen. Im Festnetz umfasst das Zugangsnetz beispielsweise einen DSLAM (digital subscriber line access multiplexer), um die Kommunikationsendgeräte mehrerer Teilnehmer draht- bzw. kabelgebunden anzuschließen. Über das Vermittlungsnetz kann die Kommunikation in weitere Netze, beispielsweise anderer Netzbetreiber, z.B. Auslandsnetze, weitervermittelt werden.

Die im Folgenden vorgestellten Kommunikationsnetzwerke können verschiedene Technologien und Netzwerkstandards umfassen, beispielsweise entsprechend der 5G Systemarchitektur. Diese umfasst das Konzept des Network-Slicing. Network Slicing ist eine Form der virtuellen Netzwerkarchitektur, die die gleichen Prinzipien wie Software Defined Networking (SDN) und Network Functions Virtualization (NFV) in Festnetzen verwendet. SDN und NFV werden eingesetzt, um eine größere Netzwerkflexibilität zu erreichen, indem traditionelle Netzwerkarchitekturen in virtuelle Elemente partitioniert werden, die (auch über Software) miteinander verknüpft werden können.

Durch das Netzwerk-Slicing können mehrere virtuelle Netzwerke auf einer gemeinsamen physischen Infrastruktur erstellt werden. Die virtuellen Netzwerke werden dann an die spezifischen Anforderungen von Anwendungen, Diensten, Geräten, Kunden oder Betreibern angepasst.

Jedes virtuelle Netzwerk (Netzwerk-Slice) umfasst einen unabhängigen Satz logischer Netzwerkfunktionen, die die Anforderungen des jeweiligen Anwendungsfalls unterstützen, wobei sich der Begriff "logisch" auf Software bezieht.

Jeder dieser virtuellen Netzwerke bzw. Netzwerk-Slices wird optimiert, um die Ressourcen und die Netzwerktopologie für den bestimmten Dienst und Verkehr bereitzustellen, der das entsprechende Segment verwendet. Funktionen wie Geschwindigkeit, Kapazität, Konnektivität und Abdeckung werden zugewiesen, um die besonderen Anforderungen jedes Anwendungsfalls zu erfüllen, aber funktionale Komponenten können auch über verschiedene Netzwerk-Slices hinweg gemeinsam genutzt werden.

Jedes Netzwerk-Slice kann dabei vollständig isoliert sein, so dass kein Netzwerk-Slice den Verkehr in einem anderen Netzwerk-Slice stören kann. Dies verringert das Risiko der Einführung und des Betriebs neuer Dienste und unterstützt auch die Migration, da neue Technologien oder Architekturen auf isolierten Slices gestartet werden können. Es hat auch Auswirkungen auf die Sicherheit, denn wenn ein Cyber-Angriff eine Slice durchbricht, ist der Angriff eingedämmt und kann sich nicht über diese Slice hinaus ausbreiten.

Jedes Netzwerk Slice wird mit ihrer eigenen Netzwerkarchitektur, ihrem Engineering-Mechanismus und ihrer Netzwerkbereitstellung konfiguriert. Dazu kann jede Netzwerkslice Managementfähigkeiten erhalten, die je nach Anwendungsfall vom Netzbetreiber oder vom Kunden gesteuert werden können. Die Netzwerk-Slices können unabhängig verwaltet und orchestriert werden.

Gemäß einem ersten Aspekt betrifft die Erfindung ein Verfahren zum Aufbauen einer Roaming-Verbindung über eine Netzwerkzugangs-Entität eines besuchten Kommunikationsnetzwerks mit den folgenden Schritten: Übertragen einer Registrierungsanfrage durch ein Kommunikationsendgerät an eine Netzwerkzugangs-Entität des besuchten Kommunikationsnetzwerks über eine dedizierte Kommunikationsschnittstelle (N1) zwischen dem Kommunikationsendgerät und der Netzwerkzugangs-Entität, wobei die Registrierungsanfrage eine Identifikation (UE ID) des Kommunikationsendgeräts umfasst; Abfragen von teilnehmerspezifischen Registrierungsdaten des Kommunikationsendgeräts durch die Netzwerkzugangs-Entität von einer Datenbasis eines Heimatkommunikationsnetzwerks des Kommunikationsendgeräts oder von einer externen Datenbank basierend auf der UE ID des Kommunikationsendgeräts; Übertragen von Netzwerkzugangsdaten für den Zugang des Kommunikationsendgeräts zu dem besuchten Kommunikationsnetzwerk durch die Netzwerkzugangs-Entität an das Kommunikationsendgerät über die dedizierte Kommunikationsschnittstelle (N1) basierend auf den teilnehmerspezifischen Registrierungsdaten des Kommunikationsendgeräts, wobei die Netzwerkzugangsdaten Fähigkeiten des besuchten Kommunikationsnetzwerks anzeigen; und Aufbauen der Roaming-Verbindung durch das Kommunikationsendgerät über das besuchte Kommunikationsnetzwerk basierend auf den Netzwerkzugangsdaten.

Bei Verwendung der dedizierten Kommunikationsschnittstelle N1 zwischen Netzwerkzugangs-Entität und Datenbasis des Heimatnetzes des UEs kann die Verbindungsprozedur des UEs im besuchten PLMN beschleunigt werden, da das UE nur über die dedizierte Kommunikationsschnittstelle N1, die bereits eingerichtet ist, Kontakt zur Netzwerkzugangs-Entität aufnehmen muss, um alle relevanten Daten zu erhalten, um eine Kommunikationsverbindung (Roaming) über das besuchte Netzwerk aufzubauen. Es brauchen nicht mehr eine Vielzahl von Netzwerkelementen abgefragt werden unter Nutzung einer Vielzahl verschiedener Schnittstellen, die unter Umständen im besuchten Netzwerk gar nicht vorhanden sind, und evtl. das Aufbauen der Roaming-Verbindung scheitern lassen. Damit erhöht sich die Leistungsfähigkeit und Flexibilität der Kommunikation, insbesondere beim Roaming in 5G Kommunikationsnetzen.

Gemäß einer Ausführungsform des Verfahrens geben die Netzwerkzugangsdaten zumindest eine der folgenden Fähigkeiten des besuchten Kommunikationsnetzwerks an: die Fähigkeit, Daten und/oder Sprache zu übertragen, Anzahl und Typ von Netzwerk-Slices des besuchten Kommunikationsnetzwerks, Unterstützung bestimmter Netzwerk-Slice Funktionen, Unterstützung von 2G/3G, 4G und/oder 5G Roaming, Unterstützung eines bestimmten Dienstes durch das besuchte Kommunikationsnetzwerk.

Dies bringt den Vorteil, dass das UE auf einfache Weise über die Fähigkeiten des besuchten Netzwerks informiert wird und so entscheiden kann, ob es eine Roaming-Verbindung aufbauen kann, d.h. ob die Fähigkeiten des besuchten Netzwerks zu den Fähigkeiten des UE passen. Ein 4G UE kann beispielsweise eine Roaming-Verbindung aufbauen, wenn das besuchte Netzwerk 4G unterstützt.

Gemäß einer Ausführungsform umfasst das Verfahren ferner: Bestimmen einer PLMN ID des Heimatkommunikationsnetzwerks des Kommunikationsendgeräts durch die Netzwerkzugangs-Entität basierend auf der UE ID; und Abfragen der teilnehmerspezifischen Registrierungsdaten des Kommunikationsendgeräts basierend auf der PLMN ID des Heimatkommunikationsnetzwerks.

Dies bringt den Vorteil, dass die Netzwerkzugangs-Entität alle nötigen Daten von den entsprechenden Netzwerkelementen abfragen kann und damit sich die Roaming-Prozedur für das UE vereinfacht. Die Netzwerkzugangs-Entität stellt damit dem UE ein Abbild der für das Roaming benötigten Daten zur Verfügung. Das UE braucht daher außer der dedizierten Schnittstelle zur Netzwerkzugangs-Entität, welche bereits gemäß der System-Architektur definiert ist, keine weiteren Daten vorhalten.

Gemäß einer Ausführungsform umfasst das Verfahren: Bestimmen der Netzwerkzugangsdaten basierend auf einer Abfrage nach den Fähigkeiten des besuchten Kommunikationsnetzwerks durch die Netzwerkzugangs-Entität bei einer Datenbasis des besuchten Kommunikationsnetzes.

Dies bringt den Vorteil, dass mittels der Abfrage der Netzwerkzugangs-Entität bei der Datenbasis des besuchten PLMN die Fähigkeiten des besuchten PLMNs bestimmt werden können, und zwar bereits bei Initialisierung der Netzwerkzugangs-Entität im besuchten PLMN, so dass diese Aufgabe nicht durch das UE erfolgen braucht, was zu einer Entlastung des UE führt, welches auf seine Anfrage bei der Netzwerkzugangs-Entität sogleich die passende Antwort erhält.

Gemäß einer Ausführungsform umfasst das Verfahren: Modifizieren der Netzwerkzugangsdaten basierend auf den teilnehmerspezifischen Registrierungsdaten des Kommunikationsendgeräts durch die Netzwerkzugangs-Entität und Übertragen der modifizierten Daten durch die Netzwerkzugangs-Entität an das Kommunikationsendgerät.

Dies bringt den Vorteil, dass die Netzwerkzugangs-Entität als Steuerungsinstanz in den Roaming-Prozess eingreifen kann, indem sie dem UE nur die Daten zur Verfügung stellt, welche an seine Fähigkeiten angepasst sind.

Gemäß einer Ausführungsform des Verfahrens geben die modifizierten Daten eine Auswahl aus den Fähigkeiten des besuchten Kommunikationsnetzwerks basierend auf den teilnehmerspezifischen Registrierungsdaten des Kommunikationsendgeräts an.

Dies bringt den Vorteil, dass sich die Auswahlmöglichkeit des UE auf das Notwendige und Sinnvolle reduziert und somit den Roaming-Prozess im UE vereinfacht. Somit erhält das UE keine Daten, mit denen der Roaming-Prozess gar nicht möglich ist oder zu einem bestimmten Zeitpunkt abbricht. Dies beschleunigt den gesamten Verbindungsaufbau beim Roaming.

Gemäß einer Ausführungsform des Verfahrens zeigen die modifizierten Daten dem Kommunikationsendgerät an, welche Fähigkeiten des besuchten Kommunikationsnetzwerks für das Kommunikationsendgerät geeignet sind.

Dies bringt den Vorteil, dass das UE vorab entscheiden kann, ob es eine Roaming-Verbindung über das besuchte Kommunikationsnetz aufnehmen möchte. Falls die Fähigkeiten des besuchten Netzes nicht geeignet sind, beispielsweise wenn kein 4G oder 5G unterstützt wird, da es sich um ein Circuit-Switched V PLMN handelt, kann das UE sich für ein Roaming über ein anderes V PLMN entscheiden, welches die von ihm gewünschten Fähigkeiten aufweist, auch wenn die Signalstärke zum entsprechenden Einwahlpunkt (Access Point oder Basisstation) schwächer ist als die zum zuerst aufgefundenen V PLMN.

Gemäß einer Ausführungsform umfasst das Verfahren: Abfragen der teilnehmerspezifischen Registrierungsdaten des Kommunikationsendgeräts von der Datenbasis des Heimatkommunikationsnetzwerks über eine dedizierte Kommunikationsschnittstelle (B2) zwischen der Netzwerkzugangs-Entität und der Datenbasis des Heimatkommunikationsnetzwerks oder der externen Datenbasis.

Dies bringt den Vorteil, dass über die dedizierte Kommunikationsschnittstelle B2 die teilnehmerspezifischen Registrierungsdaten schnell verfügbar sind, da diese Schnittstelle B2 speziell für das Roaming eingerichtet ist.

Gemäß einer Ausführungsform des Verfahrens umfasst die dedizierte Kommunikationsschnittstelle (N1) zwischen dem Kommunikationsendgerät und der Netzwerkzugangs-Entität eine N1-Schnittstelle eines 5G Kernnetzwerks; und die Netzwerkzugangs-Entität umfasst eine AMF-Entität des 5G Kernnetzwerks.

Dies bringt den Vorteil, dass der Aufbau der Roaming-Verbindung beschleunigt wird, da die N1-Schnittstelle zwischen UE und AMF-Entität im 5G Kernnetzwerk bereits in der Systemarchitektur spezifiziert ist. Über diese Schnittstelle N1 lassen sich daher auch effizient Daten übertragen, welche für das Roaming benötigt werden.

Gemäß einer Ausführungsform des Verfahrens erfolgt das Abfragen der teilnehmerspezifischen Registrierungsdaten des Kommunikationsendgeräts durch die Netzwerkzugangs-Entität ansprechend auf die Registrierungsanfrage von dem Kommunikationsendgerät oder beim Initialisieren der Netzwerkzugangs-Entität.

Dies bringt den Vorteil, dass zum einen die Netzwerkzugangsdaten nur dann abgefragt werden, wenn sie auch benötigt werden, so dass die Netzwerkzugangs-Entität keinen großen Speicher zum Speichern von Netzwerkzugangsdaten verschiedenster UEs vorhalten muss. Im anderen Fall können die Netzwerkzugangsdaten bereits beim Initialisieren der Netzwerkzugangs-Entität abgefragt werden, so dass der Roaming-Prozess noch zügiger ablaufen kann, da alle notwendigen Informationen zur gegebenen Zeit bereits in der Netzwerkzugangs-Entität vorhanden sind.

Gemäß einer Ausführungsform des Verfahrens weist die Registrierungsanfrage ferner eine Identifikation eines spezifischen Dienstes auf, nach welchem das Kommunikationsendgerät bei dem besuchten Kommunikationsnetzwerk anfragt; und das Verfahren umfasst ferner: Bereitstellen des spezifischen Dienstes durch das besuchte Kommunikationsnetzwerk basierend auf der Identifikation des spezifischen Dienstes, falls das besuchte Kommunikationsnetzwerk den spezifischen Dienst unterstützt; und Übertragen einer PLMN ID eines anderen Kommunikationsnetzwerks, welches den spezifischen Dienst unterstützt, durch die Netzwerkzugangs-Entität an das Kommunikationsendgerät, falls das besuchte Kommunikationsnetzwerk den spezifischen Dienst nicht unterstützt.

Dies bringt den Vorteil, dass das UE schnell erfährt, ob das besuchte PLMN einen bestimmten Dienst unterstützt, und falls nicht an ein PLMN verwiesen wird, welches den angefragten Dienst unterstützt. Dies beschleunigt den Roaming-Prozess signifikant.

Gemäß einem zweiten Aspekt betrifft die Erfindung eine Netzwerkzugangs-Entität und ist im Anspruch 13 definiert.

Bei Verwendung der Netzwerkzugangs-Entität kann die Verbindungsprozedur des UEs im besuchten PLMN beschleunigt werden, da das UE nur Kontakt zur Netzwerkzugangs-Entität aufnehmen muss, um alle relevanten Daten zu erhalten, um eine Kommunikationsverbindung (Roaming) über das besuchte Netzwerk aufzubauen. Es brauchen nicht mehr eine Vielzahl von Netzwerkelementen abgefragt werden unter Nutzung einer Vielzahl verschiedener Schnittstellen, die unter Umständen im besuchten Netzwerk gar nicht vorhanden sind, und evtl. das Aufbauen der Roaming-Verbindung scheitern lassen. Damit erhöht sich die Leistungsfähigkeit und Flexibilität der Kommunikation, insbesondere beim Roaming in 5G Kommunikationsnetzen.

Gemäß einer Ausführungsform der Netzwerkzugangs-Entität geben die Netzwerkzugangsdaten zumindest eine der folgenden Fähigkeiten des besuchten Kommunikationsnetzwerks an: die Fähigkeit, Daten und/oder Sprache zu übertragen, Anzahl und Typ von Netzwerk-Slices des besuchten Kommunikationsnetzwerks, Unterstützung bestimmter Netzwerk-Slice Funktionen, Unterstützung von 2G/3G, 4G und/oder 5G Roaming, Unterstützung eines bestimmten Dienstes durch das besuchte Kommunikationsnetzwerk.

Dies bringt den Vorteil, dass das UE auf einfache Weise über die Fähigkeiten des besuchten Netzwerks informiert wird und so entscheiden kann, ob es eine Roaming-Verbindung aufbauen kann, d.h. ob die Fähigkeiten des besuchten Netzwerks zu den Fähigkeiten des UE passen. Ein 4G UE kann beispielsweise eine Roaming-Verbindung aufbauen, wenn das besuchte Netzwerk 4G unterstützt.

Gemäß einem dritten Beispiel betrifft ein Kommunikationssystem, insbesondere ein 5G Kommunikationsnetzwerk, mit: einem Kommunikationsendgerät; einem besuchten Kommunikationsnetzwerk des Kommunikationsendgeräts; einem Heimatkommunikationsnetzwerk des Kommunikationsendgeräts; und einer Netzwerkzugangs-Entität gemäß dem zweiten Aspekt, die ausgebildet ist, dem Kommunikationsendgerät Netzwerkzugangsdaten für den Zugang zu dem besuchten Kommunikationsnetzwerk bereitzustellen, wobei das Kommunikationsendgerät ausgebildet ist, eine Roaming-Verbindung über das besuchte Kommunikationsnetzwerk basierend auf den Netzwerkzugangsdaten aufzubauen.

Ein solches Kommunikationssystem bietet die oben beschriebenen Vorteile. D.h. bei Verwendung eines solchen Kommunikationsendgeräts zusammen mit einer Netzwerkzugangs-Entität, wie oben angegeben, kann die Verbindungsprozedur des UEs im besuchten PLMN beschleunigt werden, da das UE nur Kontakt zur Netzwerkzugangs-Entität über die dedizierte Kommunikationsschnittstelle aufnehmen muss, um alle relevanten Daten zu erhalten, um eine Kommunikationsverbindung (Roaming) über das besuchte Netzwerk aufzubauen. Es brauchen nicht mehr eine Vielzahl von Netzwerkelementen abgefragt werden unter Nutzung einer Vielzahl verschiedener Schnittstellen, die unter Umständen im besuchten Netzwerk gar nicht vorhanden sind, und evtl. das Aufbauen der Roaming-Verbindung scheitern lassen. Damit erhöht sich die Leistungsfähigkeit und Flexibilität der Kommunikation, insbesondere beim Roaming.

Gemäß einem vierten Beispiel betrifft ein Kommunikationsendgerät, mit einer dedizierten Kommunikationsschnittstelle, z.B. einer N1 Schnittstelle, zu einer Netzwerkzugangs-Entität, z.B. einer AMF-Entität eines 5G-Kernnetzwerks; und einem Prozessor, der ausgebildet ist, über die dedizierte Kommunikationsschnittstelle eine Roaming-Anfrage zu der Netzwerkzugangs-Entität zu übertragen, wobei die Roaming-Anfrage eine Identität (UE ID) des Kommunikationsendgeräts umfasst, und ferner ausgebildet ist, über die dedizierte Kommunikationsschnittstelle eine Antwort auf die Roaming-Anfrage zu erhalten, wobei die Antwort Netzwerkzugangsdaten des besuchten Kommunikationsnetzwerks umfasst, wobei der Prozessor ausgebildet ist, basierend auf den Netzwerkzugangsdaten eine Roaming-Verbindung über das besuchte Kommunikationsnetzwerk zu initiieren.

Ein solches Kommunikationsendgerät bzw. UE bietet die oben beschriebenen Vorteile. D.h. bei Verwendung eines solchen Kommunikationsendgeräts zusammen mit einer Netzwerkzugangs-Entität, wie oben angegeben, kann die Verbindungsprozedur des UEs im besuchten PLMN beschleunigt werden, da das UE nur Kontakt zur Netzwerkzugangs-Entität über die dedizierte Kommunikationsschnittstelle aufnehmen muss, um alle relevanten Daten zu erhalten, um eine Kommunikationsverbindung (Roaming) über das besuchte Netzwerk aufzubauen. Es brauchen nicht mehr eine Vielzahl von Netzwerkelementen abgefragt werden unter Nutzung einer Vielzahl verschiedener Schnittstellen, die unter Umständen im besuchten Netzwerk gar nicht vorhanden sind, und evtl. das Aufbauen der Roaming-Verbindung scheitern lassen. Damit erhöht sich die Leistungsfähigkeit und Flexibilität der Kommunikation, insbesondere beim Roaming.

Weitere Ausführungsbeispiele werden Bezug nehmend auf die beiliegenden Zeichnungen erläutert. Es zeigen:
Fig. 1 eine schematische Darstellung einer 5G Systemarchitektur 100;
Fig. 2 eine schematische Darstellung des Roaming-Szenarios für ein 5G-Kommunikationsnetzwerk 200 mit Netzwerkzugangs-Entität 251 im besuchten Kommunikationsnetz 240 gemäß einer beispielhaften Ausführungsform;
Fig. 3 eine schematische Darstellung einer Netzwerkzugangs-Entität 251 gemäß einer beispielhaften Ausführungsform; und
Fig. 4 eine schematische Darstellung eines Roaming-Verfahrens 400 gemäß einer beispielhaften Ausführungsform.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

Wenngleich ein bestimmtes Merkmal oder ein bestimmter Aspekt einer Ausführungsform bezüglich nur einer von mehreren Implementierungen offenbart worden sein mag, kann außerdem ein derartiges Merkmal oder ein derartiger Aspekt mit einem oder mehreren anderen Merkmalen oder Aspekten der anderen Implementierungen kombiniert werden, wie für eine gegebene oder bestimmte Anwendung erwünscht und vorteilhaft sein kann. Weiterhin sollen in dem Ausmaß, in dem die Ausdrücke "enthalten", "haben", "mit" oder andere Varianten davon entweder in der ausführlichen Beschreibung oder den Ansprüchen verwendet werden, solche Ausdrücke auf eine Weise ähnlich dem Ausdruck "umfassen" einschließend sein. Die Ausdrücke "gekoppelt" und "verbunden" können zusammen mit Ableitungen davon verwendet worden sein. Es versteht sich, dass derartige Ausdrücke dazu verwendet werden, um anzugeben, dass zwei Elemente unabhängig davon miteinander kooperieren oder interagieren, ob sie in direktem physischem oder elektrischem Kontakt stehen oder nicht in direktem Kontakt miteinander stehen. Außerdem ist der Ausdruck "beispielhaft" lediglich als ein Beispiel aufzufassen anstatt der Bezeichnung für das Beste oder Optimale. Die folgende Beschreibung ist deshalb nicht in einem einschränkenden Sinne zu verstehen.

Im Folgenden werden Netzwerkzugangs-Entitäten und Funktionen einer solchen Netzwerkzugangs-Entität beschrieben. Die Netzwerkzugangs-Entität stellt den Zugang und die Mobilitätsverwaltung im Kommunikationsnetzwerk sicher. Über die Netzwerkzugangs-Entität können sich Kommunikationsendgeräte mit ihrer Identität UE ID im Kommunikationsnetzwerk registrieren und erhalten die Erlaubnis, eine Kommunikationsverbindung aufzubauen. Die Netzwerkzugangs-Entität kann beispielsweise im 5G Kommunikationsnetzwerk eine AMF (Access and Mobility Management Function) sein, welche die Zugangs- und Mobilitätsmanagement Funktion darstellt. Diese verwaltet die Zugangs- und Mobilitätssteuerung. Die AMF kann auch Netzwerkslice Auswahlfunktionalität umfassen. Bei drahtlosem Zugang wird die Mobilitätsverwaltung nicht benötigt. Die Netzwerkzugangs-Entität kann im 4G Kommunikationsnetzwerk beispielsweise eine MME (Mobilitäts-Management Entität) sein. Die MME ist eine Netzwerkkomponente des LTE (Long Term Evolution) Mobilfunkstandards, welche die Funktionen des Paging zum Aufbau von Anrufen und allgemein Kommunikationsverbindungen sowie Signalisierung für Kontrollzwecke erfüllt. Die MME bildet das Verbindungsstück zwischen Kernnetzwerk und Zugangsnetzwerk. Die MME verwaltet die Aufenthaltsorte aller mobilen Kommunikationsendgeräte in den ihr angeschlossenen Funkzellen. Im LTE-System werden in der Regel mehrere Zellen zu einer *Tracking Area* zusammengefasst. Das Verwaltungsgebiet einer MME kann in mehrere *Tracking Areas* aufgeteilt sein.

Die Netzwerkzugangs-Entität stellt ferner die technische Funktion bereit, zunächst zu einem vorher sicherheitstechnisch unbekannten Gerät eine Sicherheitsbeziehung aufzubauen, um dann jeweils im Gerät selbst und in der Network Application Function bzw. Netzwerkanwendungsfunktion (NAF) der Netzwerkzugangsfunktion Sicherheitselemente (Schlüssel) installieren zu können. Beispielsweise können die Protokolle Diameter und Hypertext Transfer Protocol (http) eingesetzt werden; u. U. kann zwischen BSF und NAF anstatt Diameter auch SOAP Verwendung finden.

Beteiligt an der Unterhaltung einer solchen generischen Sicherheitsbeziehung sind die folgenden Funktionselemente: Endgerät, z. B. ein Mobiltelefon, kurz User Equipment (UE), das einen bestimmten Dienst nutzen will, Anwendungsserver, der den Dienst bereitstellt, z. B. für Mobile TV, VoLTE, VoIP, FTP Datentransfer, Media Streaming, Internet Browsing, etc., kurz Network Application Function bzw. Netzwerkanwendungsfunktion (NAF), die Netzwerkzugangs-Entität selbst, welche zwischen UE und NAF eine Sicherheitsbeziehung vermittelt sowie eine Datenbasis des Heimnetzwerks, z.B. HSS Home Subscriber Server (HSS) oder UDR, Unified Data Repository des (Mobilfunk-)Netzproviders, welche die jeweiligen benutzerspezifischen Profile seiner Endgerätebenutzer verwaltet.

Die Netzwerkzugangsfunktion der Netzwerkzugangs-Entität wird vom Anwendungsserver (NAF) hinzugezogen, nachdem ein Endgerät bei diesem um Dienstzugang gebeten hat. Da der Anwendungsserver das Endgerät zu diesem Zeitpunkt noch nicht kennt, verweist er dieses zunächst weiter an die Netzwerkzugangsfunktion. Das Endgerät und die Netzwerkzugangsfunktion authentisieren sich nun beiderseits; dies kann beispielsweise mittels des Protokolls AKA (Authentication and Key Agreement) geschehen und per Anfragen der Netzwerkzugangsfunktion an den Home Subscriber Server (HSS) bzw. die UDR Datenbasis des Heimatnetzwerks. Anschließend einigen sich Netzwerkzugangsfunktion und Endgerät (UE) auf einen Sitzungsschlüssel, der zum verschlüsselten Datenaustausch mit dem Anwendungsserver (NAF) genutzt werden soll. Wendet sich das Endgerät nun erneut an den Anwendungsserver, so kann dieser sowohl den Sitzungsschlüssel als auch benutzerspezifische Daten von der Netzwerkzugangsfunktion beziehen und den Datenaustausch mit dem Endgerät (UE) beginnen. Dabei werden die passenden Sitzungsschlüssel zur kryptographischen Absicherung verwendet.

Die Sicherheitsbeziehung selbst zwischen Endgerät und Netzwerkzugangs-Entität verlässt dabei nie die Hoheit des (Mobilfunk-)Netzbetreibers, nur von dieser Sicherheitsbeziehung abgeleitete Daten (Schlüssel) können abgefragt und von Applikationen verwendet werden.

Die in dieser Offenbarung beschriebene Netzwerkzugangs-Entität dient insbesondere dazu, den Aufbau der Roaming-Verbindung des Kommunikationsendgeräts zu vereinfachen, wie im Folgenden in dieser Offenbarung beschrieben.

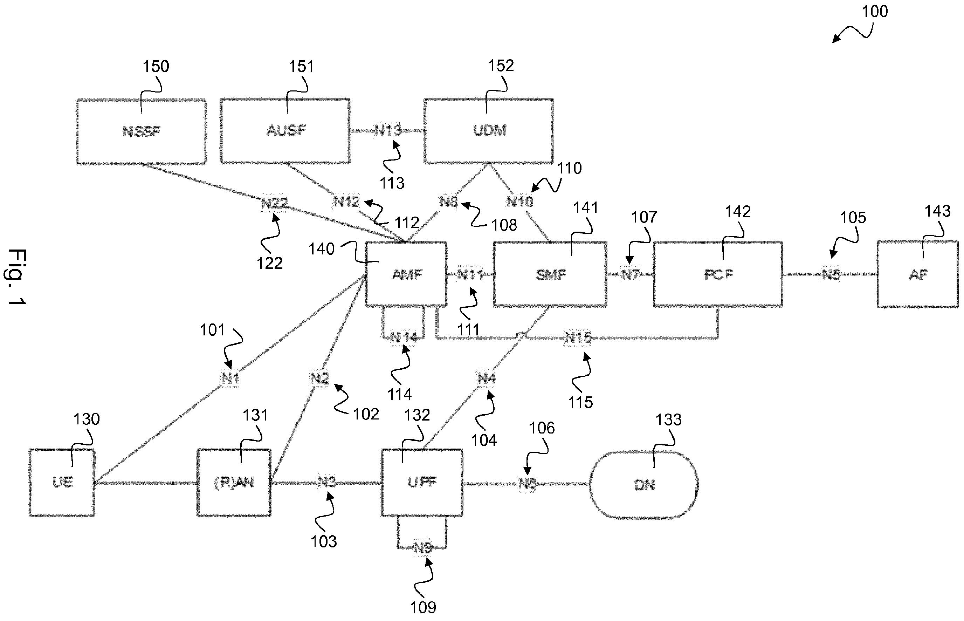

Fig. 1 zeigt eine schematische Darstellung einer 5G Systemarchitektur 100. Die 5G Systemarchitektur 100 umfasst die in den einzelnen Blöcken der Figur 1 dargestellten Netzwerkfunktionen.

Der Block UE (User Equipment) 130 stellt das User Equipment bzw. Client Terminal oder mobile Kommunikationsgerät dar, welches von dem Teilnehmer bedient werden kann, um eine Kommunikation im 5G Netzwerk zu initiieren, d.h. eine Kommunikation zu starten (mobile originating, MO) oder anzunehmen (mobile terminating, MT). Da UE kann auch ohne Nutzerinteraktion eine Kommunikation initiieren, z.B. kann es ein Maschinenterminal sein, z.B. für ein Auto oder einen Roboter oder ein sonstiges Gerät.

Der Block (R)AN ((Radio) Access Network) 131 stellt das (Funk-) Zugangsnetz dar, mit dem das UE 130 Zugang zum 5G Kommunikationsnetz erhält. Die Schnittstelle zwischen UE 130 und (R)AN ist entweder eine Luftschnittstelle, wenn es sich bei dem Zugangsnetz 131 um ein Funknetz handelt oder kabelgebunden, wenn das Zugangsnetz ein drahtgebundenes Netz ist.

Der Block AMF (Access and Mobility Management Function) 140 stellt die Zugangs- und Mobilitätsmanagement Funktion dar. Diese verwaltet die Zugangs- und Mobilitätssteuerung. Die AMF kann auch Netzwerkslice Auswahlfunktionalität umfassen. Bei drahtlosem Zugang wird die Mobilitätsverwaltung nicht benötigt.

Der Block SMF (Session Management Function) 141 stellt die SitzungsverwaltungsFunktion dar. Diese setzt Sitzungen auf und verwaltet diese entsprechend der Netzwerk Policy bzw. Netzwerkplanung.

Der Block UPF (User Plane Function) 132 stellt die User Plane Funktion dar. UPFs können in verschiedenen Konfigurationen und Orten angewendet werden, entsprechend dem Diensttyp.

Der Block PCF (Policy Control Function) 142 stellt die Policy (bzw. Planungs) SteuerungsFunktion dar. Diese stellt ein Policy-Framework bereit, welches Network Slicing, Roaming und Mobilitätsmanagement beinhaltet. Dies entspricht der Funktionalität einer PCRF in 4G-Systemen.

Der Block UDM (Unified Data Management) 152 stellt ein gemeinsames Datenmanagement zur Verfügung. Damit werden Teilnehmerdaten und -profile gespeichert. Dies entspricht der Funktionalität eines HSS in 4G-Systemen, wird jedoch sowohl für den mobilen als auch den drahtgebundenen Zugang im NG Core Netz genutzt.

Der Block DN (Data Network) 133 stellt das Datennetzwerk zur Verfügung, über welches Daten übertragen werden, z.B. von einem UE zu einem anderen UE.

Der Block AUSF (Authentication Server Function) 151 stellt Authentifizierungsfunktionalität zur Verfügung, mit der sich der Teilnehmer bzw. das UE im Netzwerk anmelden kann.

Der Block AF (Application Function) 151 stellt Anwendungsfunktionen zur Verfügung, mit denen bestimmte Dienste ausgeführt werden können.

Der Block NSSF (Network Slice Selection Function) 150 stellt Funktionen zur Verfügung, um bestimmte Networkslices auszuwählen.

Die in Figur 1 dargestellte 5G Systemarchitektur stellt die Struktur des NG (NextGeneration)-Netzwerks dar, welches aus Netzwerkfunktionen (NFs) und Referenzpunkten besteht, welche die NFs verbinden. Das UE 130 ist entweder mit einem Funkzugangsnetz (Radio Access Network, RAN) 131 oder einem Zugangsnetz (Access Network, AN) 131 verbunden. Außerdem ist das UE 130 mit der Zugangs- und Mobilitätsfunktion (AMF) 140 verbunden. Das RAN 131 stellt eine Basisstation dar, die neue RAT und weiterentwickelte LTE Technologien verwendet, während das AN 131 eine allgemeine Basisstation mit Nicht-3GPP Zugang, z.B. WiFi darstellt. Das NextGeneration-Kernnetzwerk 100 besteht aus verschiedenen Netzwerkfunktionen (NFs). In Figur 1 gibt es sieben NextGeneration Kern-NFs, nämlich (1) AMF 140, (2) Sitzungsverwaltungsfunktion (SMF) 141, (3) Richtlinienkontrollfunktion (PCF) 142, (4) Anwendungsfunktion (AF) 143, (5) Authentifizierungsserverfunktion (AUSF) 151, (6) Benutzer-Ebenenfunktion (UPF) 132 und (7) Benutzerdatenverwaltung (UDM) 152.

Die Netzwerkfunktion (NF) stellt die von 3GPP übernommene Verarbeitungsfunktion in NextGen bzw. NG dar. Sie hat sowohl funktionelles Verhalten und dient gleichzeitig als Schnittstelle. Eine NF kann entweder als Netzwerkelement implementiert werden auf einer dedizierten Hardware, als Software-Instanz auf einer dedizierten Hardware oder als virtualisierte Funktion instanziiert auf einer geeigneten Plattform, z. B. einer Cloud-Infrastruktur.

Die AMF 140 bietet UE-basierte Authentifizierung, Autorisierung, Mobilitätsmanagement, etc. Ein UE 130 ist grundsätzlich mit einer einzigen AMF 140 verbunden, da die AMF 140 unabhängig von der Zugriffstechnologie ist. D.h. auch ein UE 130 mit Multiple-Access-Technologien ist nur mit einer einzigen AMF 140 verbunden.

Die SMF 141 ist für die Sitzungsverwaltung zuständig und weist den UEs 130 IP-Adressen zu. Außerdem wählt die SMF 141 die UPF 132 aus und steuert die UPF 132 bzgl. des Datentransfers. Wenn eine UE 130 mehrere Sitzungen hat, können verschiedene SMFs 141 jeder Sitzung zugeordnet sein, um sie einzeln zu steuern und möglicherweise mehrere Funktionalitäten pro Sitzung bereitzustellen.

Die AF 143 bietet Informationen über den Paketfluss und stellt sie der PCF 142 bereit, die für die Policy-Steuerung verantwortlich ist, um so den Quality of Service (QoS) zu gewährleisten. Basierend auf diesen Informationen bestimmt PCF 142 die Richtlinien über Mobilität und Sitzungsverwaltung, damit die AMF 140 und die SMF 141 ordnungsgemäß funktionieren.

Die AUSF 151 speichert Daten für die Authentifizierung der UE 130, während die UDM 152 Abonnementdaten bzw. Teilnehmerdaten der UE 130 speichert. Das Datennetzwerk DN 133, das nicht Teil des NG Core Netzwerks 100 ist, sorgt für den Internet-Zugang und die Betreiberdienste.

Die Referenzpunktdarstellung der Architektur kann verwendet werden, um detaillierte Nachrichtenabläufe in der Next Generation (NG) Standardisierung darzustellen. Der Referenzpunkt Next Generation (NG) 1 101 ist definiert als Übertragungssignalisierung zwischen der UE 130 und der AMF 140. Die Bezugspunkte für die Verbindung zwischen dem AN 131 und der AMF 140 und zwischen dem AN 131 und der UPF 132 sind als NG2 102 bzw. NG3 103 definiert. Es gibt keinen Referenzpunkt zwischen dem AN 131 und der SMF 141, aber es gibt einen Bezugspunkt, NG11 111, zwischen der AMF 140 und der SMF 141. Dies bedeutet, dass die SMF 141 von der AMF 140 gesteuert wird. NG4 104 wird von der SMF 141 und der UPF 132 verwendet, damit die UPF 132 mit dem erzeugten Steuersignal von der SMF 141 eingestellt werden kann, und die UPF 132 kann ihren Status an die SMF 141 melden. NG9 109 ist der Bezugspunkt für die Verbindung zwischen verschiedenen UPFs 132 und NG14 114 ist der Bezugspunkt zwischen jeweils verschiedenen AMFs 140. NG15 115 und NG7 107 sind definiert, damit die PCF 142 ihre Richtlinien auf die AMF 140 bzw. die SMF 141 anwenden kann. NG12 112 ist erforderlich, damit die AMF 140 die Authentifizierung der UE 130 durchführen kann. NG8 108 und NG10 110 sind definiert, weil die Abonnementdaten der UE 130 von der AMF 140 und der SMF 141 benötigt werden.

Das Next Generation Netzwerk 100 zielt darauf ab, eine Trennung von Benutzer- und Steuerungs- bzw. Kontrollebene zu realisieren. Die Benutzerebene überträgt den Benutzerdatenverkehr, während die Steuerungsebene die Signalisierung im Netzwerk überträgt. In Figur 1 befindet sich die UPF 132 in der Benutzerebene und alle anderen Netzwerkfunktionen, d.h. AMF 140, SMF 141, PCF 142, AF 143, AUSF 151 und UDM 152 befinden sich in der Steuerungsebene. Die Trennung der Benutzer- und Steuerungsebene garantiert die unabhängige Skalierung der Ressourcen jeder Netzwerkebene. Die Trennung erlaubt auch das Bereitstellen von UPFs 132 in einer verteilten Art und Weise separat von den Funktionen der Steuerungsebene.

Die NG Architektur 100 besteht aus modularisierten Funktionen. Zum Beispiel sind die AMF 140 und die SMF 141 unabhängige Funktionen in der Steuerungsebene. Getrennte AMF 140 und SMF 141 erlauben unabhängige Entwicklung und Skalierung. Andere Steuerungsebenen Funktionen wie die PCF 142 und die AUSF 151 können wie in Figur 1 dargestellt, getrennt werden. Das in Figur 1 dargestellte modularisierte Funktionsdesign ermöglicht dem Next Generation Netzwerk 100 auch ein flexibles Unterstützen verschiedenster Dienste.

Jede Netzwerkfunktion interagiert direkt mit einer anderen NF. In der Steuerungsebene sind eine Reihe von Interaktionen zwischen zwei NFs als Service definiert, so dass ihre Wiederverwendung möglich ist. Dieser Service ermöglicht die Unterstützung von Modularität. Die Benutzerebene unterstützt Interaktionen wie z.B. das Weiterleiten von Operationen zwischen verschiedenen UPFs 132.

Das Next Generation Netzwerk 100 unterstützt das Roaming ähnlich wie bei EPS (Enhanced Packet Switching). Es gibt zwei Arten von Anwendungsszenarien, zum einen Home Routed (HR), zum anderen Lokaler Ausbruch (LBO, "local breakout"). Die Strukturen, welche das Roaming und das entsprechende Sitzungsmanagement entsprechend dem hier vorgestellten Konzept unterstützen, werden im nachfolgenden näher beschrieben.

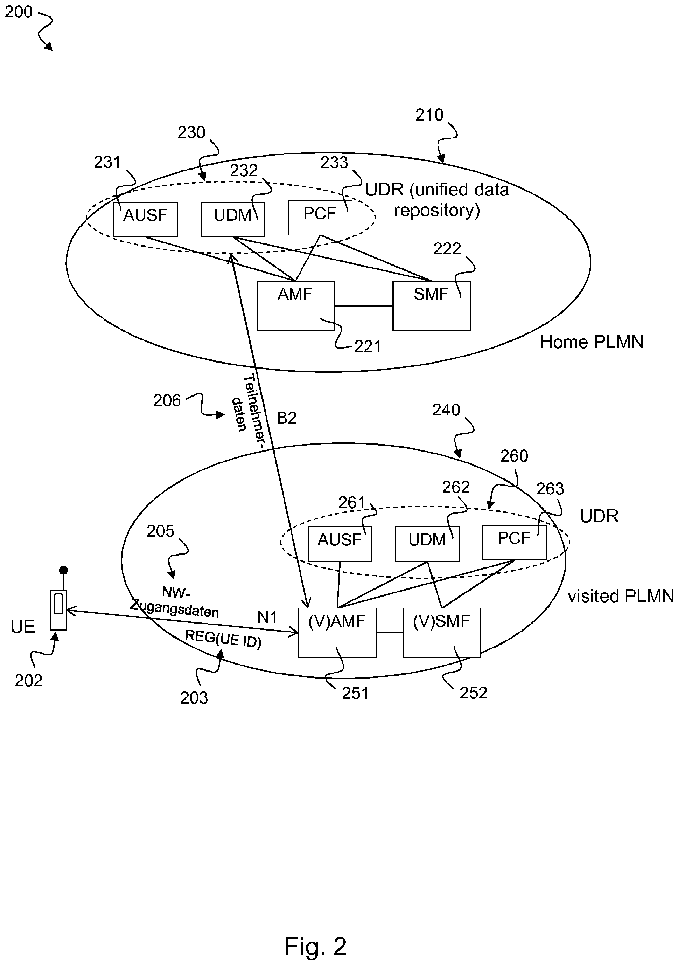

Fig. 2 zeigt eine schematische Darstellung des Roaming-Szenarios für ein 5G-Kommunikationsnetzwerk 200 mit Netzwerkzugangs-Entität 251 gemäß einer beispielhaften Ausführungsform. Das 5G-Kommunikationsnetzwerk 200 ist unterteilt in ein Heimat PLMN (Public Land Mobile Network bzw. öffentliches terrestrisches Mobilfunknetz) 210 und ein besuchtes PLMN 240. Beide Netzwerk 210, 240 haben die gleiche Struktur wie oben in Figur 1 allgemein beschrieben, wobei der Übersichtlichkeit halber nicht alle Netzwerkelemente im Einzelnen dargestellt sind. Insbesondere umfasst das besuchte Netzwerk 240 ein AMF Netzwerkelement 251, hier auch als (V)AMF bezeichnet, welches die gleiche Funktionalität und die gleichen Schnittstellen wie das oben zu Figur 1 beschriebene AMF 140 aufweist. Das besuchte Netzwerk 240 umfasst ferner ein SMF Netzwerkelement 252, hier auch als (V)SMF bezeichnet, welches die gleiche Funktionalität und die gleichen Schnittstellen wie das oben zu Figur 1 beschriebene SMF 141 aufweist. Das besuchte Netzwerk 240 umfasst ferner eine Datenbasis (UDR, "Unified Data Repository") 260 mit den Netzwerkelementen AUSF 261, UDM 262 und PCF 263, welche die gleiche Funktionalität und die gleichen Schnittstellen wie die oben zu Figur 1 beschriebenen Netzwerkelemente AUSF 151, UDM 152 und PCF 142 aufweisen.

Die gleichen Netzwerkelemente (mit den gleichen Funktionalitäten und Schnittstellen) umfasst auch das Heimat PLMN 210, d.h. ein AMF Netzwerkelement 221, ein SMF Netzwerkelement 222 und eine Datenbasis UDR 230 mit den Netzwerkelementen AUSF 231, UDM 232 und PCF 233. Das Heimat PLMN ist das PLMN, in dem das Kommunikationsendgerät bzw. der Nutzer des Kommunikationsendgeräts registriert ist, d.h. in dem er einen Vertrag mit dem Netzwerkbetreiber abgeschlossen hat. Das besuchte PLMN ist das PLMN, in dessen Netzabdeckung sich das Kommunikationsendgerät bzw. sein Nutzer gerade aufhält und über das der Nutzer eine Kommunikation, d.h. eine Roaming-Verbindung aufbauen möchte.

In dem besuchten PLMN ist die Netzwerkzugangs-Entität 251 angeordnet, welche dazu dient, das Aufbauen der Roaming-Verbindung zu erleichtern, d.h. zu beschleunigen. Das UE 202 ist über die N1-Schnittstelle, hier auch allgemein dedizierte Schnittstelle für das UE bezeichnet, an die Netzwerkzugangs-Entität 251 angebunden. Die Netzwerkzugangs-Entität 251 ist über verschiedene Kommunikationsschnittstellen, wie bereits in Figur 1 beschrieben, an einzelne Netzwerkelemente des Heimat-PLMNs 210 und des besuchten PLMNs 240 angebunden: Über die N1 Schnittstelle ist die Netzwerkzugangs-Entität 251 mit dem UE 202 verbunden. Über eine B2 Schnittstelle ist die Netzwerkzugangs-Entität 251 mit der UDR Datenbasis 230 des Heimat-PLMNs 210 verbunden. Über die N1 Schnittstelle wird eine Registrierungsanfrage 203 mit der UE Identität (UE ID), z.B. einer IMSI des UE 202 übertragen. Die Netzwerkzugangs-Entität 251 stellt der UE dann alle notwendigen Daten für den Netzwerkzugang 205 über die N1 Schnittstelle zur Verfügung. Die die Netzwerkzugangs-Entität 251 kann z.B. über die N22, N12, N8, N15 Schnittstellen entsprechend der in Figur 1 beschriebenen Systemarchitektur Netzwerk-Fähigkeiten des besuchten PLMN 240 von der UDR Datenbasis 240 des besuchten PLMN 240 abfragen und sie kann über die B2 Schnittstelle Teilnehmerdaten 206 des UEs 202 von dem Heimat PLMN 210 des UEs 202 abfragen.

Im Einzelnen kann das Verfahren zum Aufbauen der Roaming-Verbindung über die die Netzwerkzugangs-Entität 251 wie folgt ablaufen: In einem ersten Schritt wird eine Registrierungsanfrage 203 von dem Kommunikationsendgerät 202 an die Netzwerkzugangs-Entität bzw. (V)AMF 251 des besuchten Kommunikationsnetzwerks 240 übertragen. Die Registrierungsanfrage 203 umfasst die Identifikation (UE ID) des Kommunikationsendgeräts 202. Die Registrierungsanfrage 203 wird an die Netzwerkzugangs-Entität 251 über die dedizierte Kommunikationsschnittstelle, d.h. die N1 Schnittstelle übertragen.

In einem weiteren Schritt fragt die Netzwerkzugangs-Entität 251 dann teilnehmerspezifische Registrierungsdaten 206 des Kommunikationsendgeräts 202 von der Datenbasis 230 des Heimatkommunikationsnetzwerks 210 des UEs 202 oder von einer externen Datenbank ab, und zwar basierend auf der UE ID des Kommunikationsendgeräts 202.

Die Netzwerkzugangsdaten 205 für den Zugang des Kommunikationsendgeräts 202 zu dem besuchten Kommunikationsnetzwerk 240 werden dann durch die Netzwerkzugangs-Entität 251 an das Kommunikationsendgerät über die dedizierte Kommunikationsschnittstelle N1 übertragen, und zwar basierend auf den teilnehmerspezifischen Registrierungsdaten 206 des Kommunikationsendgeräts 202.

Die Netzwerkzugangsdaten 205 zeigen dabei Fähigkeiten des besuchten Kommunikationsnetzwerks 240 an. Schließlich wird die Roaming-Verbindung durch das Kommunikationsendgerät 202 (und die entsprechenden Netzwerkelemente des besuchten PLMN 240) über das besuchte Kommunikationsnetzwerk 240 basierend auf den Netzwerkzugangsdaten 205 aufgebaut.

Die Netzwerkzugangsdaten 205 können beispielsweise folgende Fähigkeiten des besuchten Kommunikationsnetzwerks 240 angeben: die Fähigkeit, Daten und/oder Sprache zu übertragen, Anzahl und Typ von Netzwerk-Slices des besuchten Kommunikationsnetzwerks 240, Unterstützung bestimmter Netzwerk-Slice Funktionen, Unterstützung von 2G/3G, 4G und/oder 5G Roaming, Unterstützung eines bestimmten Dienstes durch das besuchte Kommunikationsnetzwerk 240.

Zum Bestimmen der teilnehmerspezifischen Registrierungsdaten kann die Netzwerkzugangs-Entität 251 eine PLMN ID des Heimatkommunikationsnetzwerks 210 des Kommunikationsendgeräts 202 basierend auf der UE ID bestimmen und die teilnehmerspezifischen Registrierungsdaten 206 dann basierend auf der PLMN ID des Heimatkommunikationsnetzwerks 210 bestimmen. Die Netzwerkzugangs-Entität 251 kann die Netzwerkzugangsdaten 205 basierend auf einer Abfrage nach den Fähigkeiten des besuchten Kommunikationsnetzwerks 240 bei einer Datenbasis 260 des besuchten Kommunikationsnetzes 240 bestimmen, d.h. über eine der oben genannten Schnittstellen der Netzwerkzugangs-Entität 251 im besuchten Kommunikationsnetzwerk.

Die Netzwerkzugangs-Entität 251 kann ferner die Netzwerkzugangsdaten 205 basierend auf den teilnehmerspezifischen Registrierungsdaten 206 des Kommunikationsendgeräts 202 modifizieren und die modifizierten Daten an das Kommunikationsendgerät 202 übertragen. Die modifizierten Daten können eine Auswahl aus den Fähigkeiten des besuchten Kommunikationsnetzwerks 240 basierend auf den teilnehmerspezifischen Registrierungsdaten 206 des Kommunikationsendgeräts 202 angeben. Die modifizierten Daten können dem Kommunikationsendgerät 202 anzeigen, welche Fähigkeiten des besuchten Kommunikationsnetzwerks 240 für das Kommunikationsendgerät 202 geeignet sind.

Die Netzwerkzugangs-Entität 251 kann die teilnehmerspezifischen Registrierungsdaten 206 des Kommunikationsendgeräts 202 von der Datenbasis 230 des Heimatkommunikationsnetzwerks 210 über eine dedizierte Kommunikationsschnittstelle (B2) zwischen der Netzwerkzugangs-Entität 251 und der Datenbasis 230 des Heimatkommunikationsnetzwerks 210 oder der externen Datenbasis (nicht eingezeichnet in Figur 2) abfragen. Die dedizierte Kommunikationsschnittstelle (N1) zwischen dem Kommunikationsendgerät 202 und der Netzwerkzugangs-Entität 251 umfasst gemäß der Abbildung in Figur 2 eine N1-Schnittstelle eines 5G Kernnetzwerks umfasst, sie kann jedoch in einem anderen Kommunikationsnetzwerk eine andere dedizierte Schnittstelle darstellen. Die Netzwerkzugangs-Entität 251 umfasst in dem in Figur 2 dargestellten 5G Kommunikationsnetzwerk eine AMF-Entität. In einem anderen Kommunikationsnetzwerk kann die Netzwerkzugangs-Entität 251 aber auch eine andere Entität sein, z.B. eine MME im 4G Kommunikationsnetzwerk oder eine andere Entität mit die Netzwerkzugangs-Funktionalität.

Beispielsweise kann das Abfragen der teilnehmerspezifischen Registrierungsdaten 206 des Kommunikationsendgeräts 202 durch die Netzwerkzugangs-Entität 251 ansprechend auf die Registrierungsanfrage 203 von dem Kommunikationsendgerät 202 erfolgen. Alternativ kann das Abfragen auch beim Initialisieren der Netzwerkzugangs-Entität 251 erfolgen.

Die Registrierungsanfrage 203 kann ferner eine Identifikation eines spezifischen Dienstes aufweisen, nach welchem das Kommunikationsendgerät 202 bei dem besuchten Kommunikationsnetzwerk 240 anfragt. Der spezifische Dienst kann durch das besuchte Kommunikationsnetzwerk 240 basierend auf der Identifikation des spezifischen Dienstes bereitgestellt werden, falls das besuchte Kommunikationsnetzwerk 240 den spezifischen Dienst unterstützt. Andernfalls, d.h. falls das besuchte Kommunikationsnetzwerk 240 den spezifischen Dienst nicht unterstützt kann die Netzwerkzugangs-Entität 251 eine PLMN ID eines anderen Kommunikationsnetzwerks an das UE übertragen, welches den spezifischen Dienst unterstützt.

Die Registrierungsanfrage 203 kann ferner einen Schlüssel zum Authentifizieren des Kommunikationsendgeräts 202 umfassen. Die Netzwerkzugangs-Entität 251 kann das Kommunikationsendgerät 202 über eine Authentifizierungsentität 231 des Heimatkommunikationsnetzes 210 basierend auf dem Schlüssel authentifizieren. Dies kann bereits vor dem Abfragen der teilnehmerspezifischen Registrierungsdaten 206 erfolgen.

Im Folgenden ist ein beispielhafter Ablauf der Nachrichtenübertragung zum Aufbau der Roaming-Verbindung beschrieben. In einem ersten Schritt baut das Kommunikationsendgerät eine Verbindung über die N1 Schnittstelle zur Netzwerkzugangs-Entität, z.B. der (V)AMF auf. In einem zweiten Schritt holt sich die Netzwerkzugangs-Entität bzw. die (V)AMF Daten von der Home PLMN UDR oder einer externen Datenbank und stellt sie der UE bereit. Eventuell kombiniert und/oder modifiziert die Netzwerkzugangs-Entität bzw. die (V)AMF diese Daten mit Daten aus der VPLMN UDR und stellt sie der UE bereit. Diese Daten sind für die schnelle PLMN Selektion geeignet, z.B. welche Fähigkeiten ("capabilities"), z.B. Voice oder Daten sind möglich, welche Slices gibt es im V PLMN; ist 5G Roaming möglich oder nur 4G oder 2G/3G Roaming, welche Frequenzbänder werden unterstützt, werden bestimmte Slice-Funktionen unterstützt, wenn nicht, welches andere PLMN unterstützt diese. Die Netzwerkzugangs-Entität bzw. die (V)AMF findet damit eine PLMN ID mit einem Slice der den gewünschten Service unterstützt und/oder stellt mögliche alternative PLMN IDs bereit.

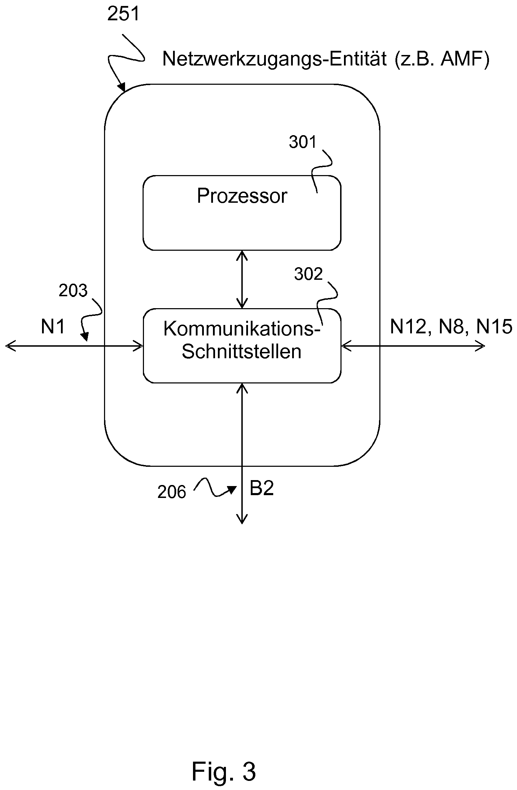

Fig. 3 zeigt eine schematische Darstellung einer Netzwerkzugangs-Entität 251 gemäß einer beispielhaften Ausführungsform. Die Netzwerkzugangs-Entität 251 kann in Hardware oder Software realisiert sein, beispielsweise als eine NetzwerkzugangsFunktion wie oben beschrieben. Die Netzwerkzugangs-Entität 251 kann im besuchten PLMN angeordnet sein, wie in Figur 2 dargestellt, z.B. in einem zentralen Bereich des besuchten PLMN oder in einer Netzwerk-Slice des besuchten PLMN, die speziell dafür vorgesehen ist.

Die Netzwerkzugangs-Entität 251 umfasst die folgenden drei, oben zu Figur 2 bereits beschriebenen Kommunikationsschnittstellen: eine Kommunikationsschnittstelle N1 mit dem Kommunikationsendgerät 202 zum Empfangen der Registrierungsanfrage 203 von dem Kommunikationsendgerät 202, welche eine Identifikation (UE ID) des Kommunikationsendgeräts 202 umfasst, wie oben zu Figur 2 beschrieben; eine Kommunikationsschnittstelle B2 mit dem Heimatnetzwerk 210 des Kommunikationsendgeräts 202 zum Empfangen von teilnehmerspezifischen Daten 206 des Kommunikationsendgeräts 202, wie oben zu Figur 2 beschrieben; und weitere Kommunikationsschnittstellen N12, N8, N15 mit dem besuchten PLMN 240, insbesondere der UDR Datenbasis 260, zum Empfangen von Informationen über Netzwerkfähigkeiten des besuchten PLMN 240, wie oben zu Figur 2 beschrieben. Die Netzwerkzugangs-Entität 251 umfasst ferner einen Prozessor 301, der ausgebildet ist, Netzwerkzugangsdaten 205 für den Zugang des Kommunikationsendgeräts 202 zu dem besuchten Kommunikationsnetzwerk 240 basierend auf den teilnehmerspezifischen Daten 206 des Kommunikationsendgeräts 202 zu bestimmen und basierend auf der UE ID des Kommunikationsendgeräts 202 an das Kommunikationsendgerät 202 zu übertragen. Die Netzwerkzugangsdaten 205 geben Fähigkeiten des besuchten Kommunikationsnetzwerks 240 an.

Die Netzwerkzugangsdaten 205 können z.B. die folgenden Fähigkeiten des besuchten Kommunikationsnetzwerks 240 angeben: die Fähigkeit, Daten und/oder Sprache zu übertragen, Anzahl und Typ von Netzwerk-Slices des besuchten Kommunikationsnetzwerks 240, Unterstützung bestimmter Netzwerk-Slice Funktionen, Unterstützung von 2G/3G, 4G und/oder 5G Roaming, Unterstützung eines bestimmten Dienstes durch das besuchte Kommunikationsnetzwerk 240.

Die Netzwerkzugangs-Entität bildet damit die zentrale Entität, welche dem UE Zugang ins besuchte Kommunikationsnetzwerk bereitstellt. Dazu baut das Kommunikationsendgerät eine Verbindung über die N1 Schnittstelle zur Netzwerkzugangs-Entität, z.B. der (V)AMF gemäß Figur 2 auf. Die Netzwerkzugangs-Entität bzw. die (V)AMF holt sich Daten von der Home PLMN UDR oder einer externen Datenbank und stellt sie der UE bereit. Eventuell kombiniert und/oder modifiziert die Netzwerkzugangs-Entität bzw. die (V)AMF diese Daten mit Daten aus der VPLMN UDR und stellt sie der UE bereit. Diese Daten sind für die schnelle PLMN Selektion geeignet, z.B. welche Fähigkeiten ("capabilities"), z.B. Voice oder Daten sind möglich, welche Slices gibt es im V PLMN; ist 5G Roaming möglich oder nur 4G oder 2G/3G Roaming, welche Frequenzbänder werden unterstützt, werden bestimmte Slice-Funktionen unterstützt, wenn nicht, welches andere PLMN unterstützt diese. Die Netzwerkzugangs-Entität bzw. die (V)AMF findet damit eine PLMN ID mit einem Slice der den gewünschten Service unterstützt und/oder stellt mögliche alternative PLMN IDs bereit.

Die Netzwerkzugangs-Entität 251 unterstützt dabei z.B. die folgende Nachrichtensequenz:
1) UE 202 registriert sich im Netz, d.h. V PLMN 240, mit UE ID, d.h. über N1 Schnittstelle mit VAMF 251; Authentifizierung, Capabilities.
2) VAMF 251 erkennt Home PLMN 210 des UE 202 anhand UE ID; alternativ ist H PLMN ID in Registrierungsmessage von UE 202 enthalten.
4) VAMF 251 besorgt Daten aus UDR 230 des Home PLMN 210.
5) VAMF 251 stellt dem UE 202 die Daten aus H-UDR 230 über N1 Schnittstelle bereit, z.B. Daten als zusätzliches Info-Feld in Nachricht an UE 202; evtl. werden H-UDR 230 Daten durch V-UDR 260 Daten modifiziert oder ergänzt. Daten umfassen z.B.: Slice IDs, VPLMN IDs und Capabilities.
6) evtl. erfolgt Auswahl eines alternativen PLMN und Rufaufbau mittels über von VAMF 251 bereitgestellten Daten.

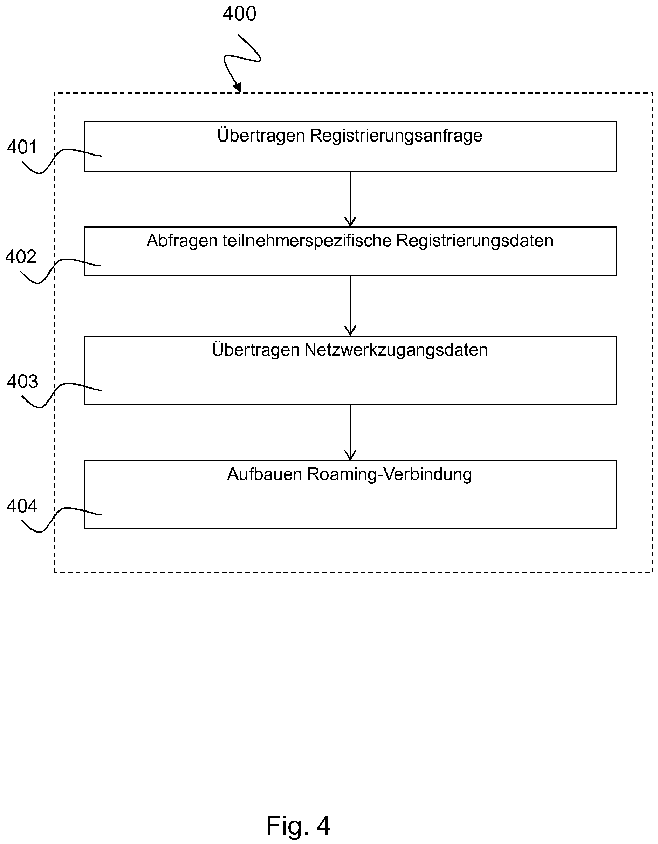

Fig. 4 zeigt eine schematische Darstellung eines Roaming-Verfahrens 400 gemäß einer beispielhaften Ausführungsform. Das Verfahren 400 dient zum Aufbauen einer Roaming-Verbindung über eine Netzwerkzugangs-Entität, z.B. eine Netzwerkzugangs-Entität 251 wie oben zu den Figuren 2 und 3 beschrieben, eines besuchten Kommunikationsnetzwerks 240.

Das Verfahren umfasst in einem ersten Schritt 401: Übertragen einer Registrierungsanfrage 203 durch ein Kommunikationsendgerät 202 an eine Netzwerkzugangs-Entität 251 des besuchten Kommunikationsnetzwerks 240 über eine dedizierte Kommunikationsschnittstelle (N1) zwischen dem Kommunikationsendgerät 202 und der Netzwerkzugangs-Entität 251, wobei die Registrierungsanfrage 203 eine Identifikation (UE ID) des Kommunikationsendgeräts 202 umfasst, wie oben zu den Figuren 2 und 3 beschrieben.

Das Verfahren umfasst in einem zweiten Schritt 402: Abfragen von teilnehmerspezifischen Registrierungsdaten 206 des Kommunikationsendgeräts 202 durch die Netzwerkzugangs-Entität 251 von einer Datenbasis 230 eines Heimatkommunikationsnetzwerks 210 des Kommunikationsendgeräts 202 oder von einer externen Datenbank basierend auf der UE ID des Kommunikationsendgeräts 202, wie oben zu den Figuren 2 und 3 beschrieben.

Das Verfahren umfasst in einem dritten Schritt 403: Übertragen von Netzwerkzugangsdaten 205 für den Zugang des Kommunikationsendgeräts 202 zu dem besuchten Kommunikationsnetzwerk 240 durch die Netzwerkzugangs-Entität 251 an das Kommunikationsendgerät über die dedizierte Kommunikationsschnittstelle (N1) basierend auf den teilnehmerspezifischen Registrierungsdaten 206 des Kommunikationsendgeräts 202, wobei die Netzwerkzugangsdaten 205 Fähigkeiten des besuchten Kommunikationsnetzwerks 240 anzeigen, wie oben zu den Figuren 2 und 3 beschrieben.

Das Verfahren umfasst in einem vierten Schritt 401: Aufbauen der Roaming-Verbindung durch das Kommunikationsendgerät 202 über das besuchte Kommunikationsnetzwerk 240 basierend auf den Netzwerkzugangsdaten 205, wie oben zu den Figuren 2 und 3 beschrieben.

Das Verfahren 500 kann weitere Schritte umfassen, wie beispielsweise entsprechend denen oben zu Figur 2 und 3 beschriebenen Verfahrensschritten.

Ein Aspekt der Erfindung umfasst auch ein Computerprogrammprodukt, das direkt in den internen Speicher eines digitalen Computers geladen werden kann und Softwarecodeabschnitte umfasst, mit denen das zu Fig. 4 beschriebene Verfahren 400 oder die zu den Figuren 2 und 3 beschriebenen Vorgänge ausgeführt werden kann, wenn das Produkt auf einem Computer läuft. Das Computerprogrammprodukt kann auf einem computergeeigneten nicht-transitorischen Medium gespeichert sein und computerlesbare Programmittel umfassen, die einen Computer veranlassen, das Verfahren 400 auszuführen oder die Netzkomponenten der in den Figuren 1 bis 3 beschriebenen Kommunikationsnetze zu implementieren bzw. zu steuern.

Der Computer kann ein PC sein, beispielsweise ein PC eines Computernetzwerks. Der Computer kann als ein Chip, ein ASIC, ein Mikroprozessor oder ein Signalprozessor realisiert sein und in einem Computernetzwerk, beispielsweise in einem Kommunikationsnetz wie in den Figuren 1 bis 5 beschrieben, angeordnet sein.

Es ist selbstverständlich, dass die Merkmale der verschiedenen beispielhaft hierin beschriebenen Ausführungsformen miteinander kombiniert werden können, außer wenn spezifisch anderweitig angegeben. Wie in der Beschreibung und den Zeichnungen dargestellt müssen einzelne Elemente, die in Verbindung stehend dargestellt wurden, nicht direkt miteinander in Verbindung stehen; Zwischenelemente können zwischen den verbundenen Elementen vorgesehen sein. Ferner ist es selbstverständlich, dass Ausführungsformen der Erfindung in einzelnen Schaltungen, teilweise integrierten Schaltungen oder vollständig integrierten Schaltungen oder Programmiermitteln implementiert sein können. Der Begriff "beispielsweise" ist lediglich als ein Beispiel gemeint und nicht als das Beste oder Optimale. Es wurden bestimmte Ausführungsformen hierin veranschaulicht und beschrieben, doch für den Fachmann ist es offensichtlich, dass eine Vielzahl von alternativen und/oder gleichartigen Implementierungen anstelle der gezeigten und beschriebenen Ausführungsformen verwirklicht werden können, ohne vom Konzept der vorliegenden Erfindung abzuweichen.

## Patentansprüche

1. Verfahren zum Aufbauen einer Roaming-Verbindung über eine Netzwerkzugangs-Entität (251) eines besuchten Kommunikationsnetzwerks (240) mit den folgenden Schritten:
Übertragen einer Registrierungsanfrage (203) durch ein Kommunikationsendgerät (202) an eine Netzwerkzugangs-Entität (251) des besuchten Kommunikationsnetzwerks (240) über eine erste dedizierte Kommunikationsschnittstelle (N1), die zwischen dem Kommunikationsendgerät (202) und der Netzwerkzugangs-Entität (251) bereits eingerichtet ist, wobei die Registrierungsanfrage (203) eine Identifikation, UE ID, des Kommunikationsendgeräts (202) umfasst;
Abfragen von teilnehmerspezifischen Registrierungsdaten (206) des Kommunikationsendgeräts (202) durch die Netzwerkzugangs-Entität (251) über eine zweite dedizierte Kommunikationsschnittstelle (B2) mit einem Heimatkommunikationsnetzwerk (210) des Kommunikationsendgeräts (202) zum Empfangen von teilnehmerspezifischen Daten des Kommunikationsendgeräts (202) von einer Datenbasis (230) des Heimatkommunikationsnetzwerks (210) des Kommunikationsendgeräts (202) oder von einer externen Datenbank basierend auf der UE ID des Kommunikationsendgeräts (202),
wobei die zweite dedizierte Kommunikationsschnittstelle (B2) speziell für das Roaming eingerichtet ist, und wobei über die zweite dedizierte Kommunikationsschnittstelle (B2) die Netzwerkzugangs-Entität (251) des besuchten Kommunikationsnetzwerks (240) mit der Datenbasis (230) des Heimatkommunikationsnetzwerks (210) des Kommunikationsendgeräts (202) verbunden ist;
Übertragen von Netzwerkzugangsdaten (205) für den Zugang des Kommunikationsendgeräts (202) zu dem besuchten Kommunikationsnetzwerk (240) durch die Netzwerkzugangs-Entität (251) an das Kommunikationsendgerät über die erste dedizierte Kommunikationsschnittstelle (N1) basierend auf den teilnehmerspezifischen Registrierungsdaten (206) des Kommunikationsendgeräts (202), wobei die Netzwerkzugangsdaten (205) Fähigkeiten des besuchten Kommunikationsnetzwerks (240) anzeigen; und
Aufbauen der Roaming-Verbindung durch das Kommunikationsendgerät (202) über das besuchte Kommunikationsnetzwerk (240) basierend auf den Netzwerkzugangsdaten (205),
wobei das Verfahren in einem System umfassend das Kommunikationsendgerät (202), das besuchte Kommunikationsnetzwerk (240) und das Heimatkommunikationsnetzwerk (210) ausgeführt wird.

2. Verfahren nach Anspruch 1,
wobei die Netzwerkzugangsdaten (205) zumindest eine der folgenden Fähigkeiten des besuchten Kommunikationsnetzwerks (240) angeben:
die Fähigkeit, Daten und/oder Sprache zu übertragen,
Anzahl und Typ von Netzwerk-Slices des besuchten Kommunikationsnetzwerks (240),
Unterstützung bestimmter Netzwerk-Slice Funktionen,
Unterstützung von 2G/3G, 4G und/oder 5G Roaming,
Unterstützung eines bestimmten Dienstes durch das besuchte Kommunikationsnetzwerk (240).

3. Verfahren nach Anspruch 1 oder 2, ferner mit:
Bestimmen einer PLMN ID des Heimatkommunikationsnetzwerks (210) des Kommunikationsendgeräts (202) durch die Netzwerkzugangs-Entität (251) basierend auf der UE ID; und
Abfragen der teilnehmerspezifischen Registrierungsdaten (206) des Kommunikationsendgeräts (202) basierend auf der PLMN ID des Heimatkommunikationsnetzwerks (210).

4. Verfahren nach einem der vorstehenden Ansprüche, mit:
Bestimmen der Netzwerkzugangsdaten (205) basierend auf einer Abfrage nach den Fähigkeiten des besuchten Kommunikationsnetzwerks (240) durch die Netzwerkzugangs-Entität (251) bei einer Datenbasis (260) des besuchten Kommunikationsnetzes (240).

5. Verfahren nach Anspruch 3 oder 4, mit:
Modifizieren der Netzwerkzugangsdaten (205) basierend auf den teilnehmerspezifischen Registrierungsdaten (206) des Kommunikationsendgeräts (202) durch die Netzwerkzugangs-Entität (251) und Übertragen der modifizierten Daten durch die Netzwerkzugangs-Entität (251) an das Kommunikationsendgerät (202).

6. Verfahren nach Anspruch 5,
wobei die modifizierten Daten eine Auswahl aus den Fähigkeiten des besuchten Kommunikationsnetzwerks (240) basierend auf den teilnehmerspezifischen Registrierungsdaten (206) des Kommunikationsendgeräts (202) angeben.

7. Verfahren nach Anspruch 5 oder 6,
wobei die modifizierten Daten dem Kommunikationsendgerät (202) anzeigen, welche Fähigkeiten des besuchten Kommunikationsnetzwerks (240) für das Kommunikationsendgerät (202) geeignet sind.

8. Verfahren nach einem der vorstehenden Ansprüche, mit:
wobei die dedizierte Kommunikationsschnittstelle (N1) zwischen dem Kommunikationsendgerät (202) und der Netzwerkzugangs-Entität (251) eine N1-Schnittstelle eines 5G Kernnetzwerks umfasst; und
wobei die Netzwerkzugangs-Entität (251) eine AMF-Entität des 5G Kernnetzwerks umfasst.

9. Verfahren nach einem der vorstehenden Ansprüche,
wobei das Abfragen der teilnehmerspezifischen Registrierungsdaten (206) des Kommunikationsendgeräts (202) durch die Netzwerkzugangs-Entität (251) ansprechend auf die Registrierungsanfrage (203) von dem Kommunikationsendgerät (202) oder beim Initialisieren der Netzwerkzugangs-Entität (251) erfolgt.

10. Verfahren nach einem der vorstehenden Ansprüche,
wobei die Registrierungsanfrage (203) ferner eine Identifikation eines spezifischen Dienstes aufweist, nach welchem das Kommunikationsendgerät (202) bei dem besuchten Kommunikationsnetzwerk (240) anfragt; und ferner mit:
Bereitstellen des spezifischen Dienstes durch das besuchte Kommunikationsnetzwerk (240) basierend auf der Identifikation des spezifischen Dienstes, falls das besuchte Kommunikationsnetzwerk (240) den spezifischen Dienst unterstützt; und
Übertragen einer PLMN ID eines anderen Kommunikationsnetzwerks, welches den spezifischen Dienst unterstützt, durch die Netzwerkzugangs-Entität (251) an das Kommunikationsendgerät (202), falls das besuchte Kommunikationsnetzwerk (240) den spezifischen Dienst nicht unterstützt.

11. Verfahren nach einem der vorstehenden Ansprüche,
wobei die Registrierungsanfrage (203) einen Schlüssel zum Authentifizieren des Kommunikationsendgeräts (202) umfasst.

12. Verfahren nach Anspruch 11, mit:
Authentifizieren des Kommunikationsendgeräts (202) durch die Netzwerkzugangs-Entität (251) über eine Authentifizierungsentität (231) des Heimatkommunikationsnetzes (210) basierend auf dem Schlüssel zum Authentifizieren des Kommunikationsendgeräts (202) vor dem Abfragen der teilnehmerspezifischen Registrierungsdaten (206).

13. Netzwerkzugangs-Entität (251) eines besuchten Kommunikationsnetzwerk (240) zum Aufbauen einer Roaming-Verbindung zwischen einem Kommunikationsendgerät (202) und dem besuchten Kommunikationsnetzwerk (240), wobei die Netzwerkzugangs-Entität (251) folgendes umfasst:
eine erste dedizierte Kommunikationsschnittstelle (N1) mit dem Kommunikationsendgerät (202), die zwischen dem Kommunikationsendgerät (202) und der Netzwerkzugangs-Entität (251) bereits eingerichtet ist, zum Empfangen einer Registrierungsanfrage (203) von dem Kommunikationsendgerät (202), wobei die Registrierungsanfrage (203) eine Identifikation, UE ID, des Kommunikationsendgeräts (202) umfasst, und zum Aufbauen der Roaming-Verbindung durch das Kommunikationsendgerät (202) über das besuchte Kommunikationsnetzwerk (240) basierend auf den Netzwerkzugangsdaten (205);
eine zweite dedizierte Kommunikationsschnittstelle (B2) mit einem Heimatnetzwerk (210) des Kommunikationsendgeräts (202) zum Empfangen von teilnehmerspezifischen Daten (206) des Kommunikationsendgeräts (202) und zum Aufbauen der Roaming-Verbindung durch das Kommunikationsendgerät (202) über das besuchte Kommunikationsnetzwerk (240) basierend auf den Netzwerkzugangsdaten (205),
wobei die zweite dedizierte Kommunikationsschnittstelle (B2) speziell für das Roaming eingerichtet ist, und wobei über die zweite dedizierte Kommunikationsschnittstelle (B2) die Netzwerkzugangs-Entität (251) mit einer Datenbasis (230) des Heimatnetzwerks (210) des Kommunikationsendgeräts (202) verbunden ist; und
einen Prozessor (301), der ausgebildet ist, Netzwerkzugangsdaten (205) für den Zugang des Kommunikationsendgeräts (202) zu dem besuchten Kommunikationsnetzwerk (240) basierend auf den teilnehmerspezifischen Daten (206) des Kommunikationsendgeräts (202) zu bestimmen und basierend auf der UE ID des Kommunikationsendgeräts (202) an das Kommunikationsendgerät (202) zu übertragen, wobei die Netzwerkzugangsdaten (205) Fähigkeiten des besuchten Kommunikationsnetzwerks (240) angeben.

14. Netzwerkzugangs-Entität (251) nach Anspruch 13,
wobei die Netzwerkzugangsdaten (205) zumindest eine der folgenden Fähigkeiten des besuchten Kommunikationsnetzwerks (240) angeben:
die Fähigkeit, Daten und/oder Sprache zu übertragen,
Anzahl und Typ von Netzwerk-Slices des besuchten Kommunikationsnetzwerks (240),
Unterstützung bestimmter Netzwerk-Slice Funktionen,
Unterstützung von 2G/3G, 4G und/oder 5G Roaming,
Unterstützung eines bestimmten Dienstes durch das besuchte Kommunikationsnetzwerk (240).

## Claims

1. A method for establishing a roaming connection via a network access entity (251) of a visited communication network (240) comprising the following steps:
transmitting a registration request (203) from a communication terminal (202) to a network access entity (251) of the visited communication network (240) via a first dedicated communication interface (N1) which is already established between the communication terminal (202) and the network access entity (251), wherein the registration request (203) comprises an identification, UE ID, of the communication terminal (202);
interrogating user specific registration data (206) of the communication terminal (202) through the network access entity (251) via a second dedicated communication interface (B2) with a home communication network (210) of the communication terminal (202) for receiving user-specific data of the communication terminal (202) from a database (230) of the home communication network (210) of the communication terminal (202) or from an external database based on the UE ID of the communication terminal (202),
wherein the second dedicated communication interface (B2) is specifically configured for the roaming, and wherein the network access entity (251) of the visited communication network (240) is connected with the database (230) of the home communication network (210) of the communication terminal (202) via the second dedicated communication interface (B2);
transmitting network access data (205) for the access of the communication terminal (202) to the visited communication network (240) through the network access entity (251) to the communication terminal via the first dedicated communication interface (N1) based on the user-specific registration data (206) of the communication terminal (202), wherein the network access data (205) show capabilities of the visited communication network (240); and
establishing the roaming connection by the communication terminal (202) via the visited communication network (240) based on the network access data (205),
wherein the method is carried out in a system comprising the communication terminal (202), the visited communication network (240) and the home communication network (210).

2. The method according to claim 1,
wherein the network access data (205) indicate at least one of the following capabilities of the visited communication network (240):
the capability to transmit data and/or speech,
number and type of network slices of the visited communication network (240),
support of specific network slice functions,
support of 2G/3G, 4G and/or 5G roaming,
support of a specific service by the visited communication network (240).

3. The method according to claim 1 or 2, further comprising:
determining a PLMN ID of the home communication network (210) of the communication terminal (202) by the network access entity (251) based on the UE ID; and
interrogating user specific registration data (206) of the communication terminal (202) based on the PLMN ID of the home communication network (210).

4. The method according to any one of the preceding claims, comprising:
determining the network access data (205) based on a request according to the capabilities of the visited communication network (240) by the network access entity (251) in a database (260) of the visited communication network (240).

5. The method according to claim 3 or 4, comprising:
modifying the network access data (205) based on the user specific registration data (206) of the communication terminal (202) by the network access entity (251) and transmitting the modified data by the network access entity (251) to the communication terminal (202).

6. The method according to claim 5,
wherein the modified data indicate a selection of the capabilities of the visited communication network (240) based on the user specific registration data (206) of the communication terminal (202).

7. The method according to claim 5 or 6,
wherein the modified data indicate to the communication terminal (202) which capabilities of the visited communication network (240) are suitable for the communication terminal (202).

8. The method according to any one of the preceding claims, comprising:
wherein the dedicated communication interface (N1) between the communication terminal (202) and the network access entity (251) comprises an N1-interface of a 5G core network; and
wherein the network access entity (251) comprises an AMF entity of the 5G core network.

9. The method according to any one of the preceding claims,
wherein interrogating the user specific registration data (206) of the communication terminal (202) by the network access entity (251) is performed in response to the registration request (203) from the communication terminal (202) or during initializing the network access entity (251).

10. The method according to any one of the preceding claims,
wherein the registration request (203) further comprises an identification of a specific service according to which the communication terminal (202) inquires at the visited communication network (240); and further comprising:
providing the specific service by the visited communication network (240) based on the identification of the specific service if the visited communication network (240) supports the specific service; and
transmitting a PLMN ID of another communication network which supports the specific service by the network access entity (251) to the communication terminal (202) if the visited communication network (240) does not support the specific service.

11. The method according to any one of the preceding claims,
wherein the registration request (203) comprises a key for authentication of the communication terminal (202).

12. The method according to claim 11, comprising:
authentication of the communication terminal (202) by the network access entity (251) via an authentication entity (231) of the home communication network (210) based on the key for authentication of the communication terminal (202) before interrogating the user specific registration data (206).

13. A network access entity (251) of a visited communication network (240) for establishing a roaming connection between a communication terminal (202) and the visited communication network (240), wherein the network access entity (251) comprises the following:
a first dedicated communication interface (N1) with the communication terminal (202), which is already established between the communication terminal (202) and the network access entity (251), for receiving a registration request (203) from the communication terminal (202), wherein the registration request (203) comprises an identification, UE ID, of the communication terminal (202), and for establishing the roaming connection by the communication terminal (202) via the visited communication network (240) based on the network access data (205);
a second dedicated communication interface (B2) comprising a home network (210) of the communication terminal (202) for receiving user specific data (206) of the communication terminal (202) and for establishing the roaming connection by the communication terminal (202) via the visited communication network (240) based on the network access data (205),
wherein the second dedicated communication interface (B2) is specifically configured for the roaming, and wherein the network access entity (251) is connected with a database (230) of the home network (210) of the communication network (202) via the second dedicated communication interface (B2); and
a processor (301) configured to determine network access data (205) for the access of the communication terminal (202) to the visited communication network (240) based on the user specific data (206) of the communication terminal (202) and to transmit based on the UE ID of the communication terminal (202) to the communication terminal (202), wherein the network access data (205) indicate capabilities of the visited communication network (240).

14. The network access entity (251) according to claim 13,
wherein the network access data (205) indicate at least one of the following capabilities of the visited communication network (240):
the capability to transmit data and/or speech,
number and type of network slices of the visited communication network (240),
support of specific network slice functions,
support of 2G/3G, 4G and/or 5G roaming,
support of a specific service by the visited communication network (240).

## Revendications

1. Procédé d'établissement d'une connexion itinérante au moyen d'une entité d'accès réseau (251) d'un réseau de communication (240) visité, comprenant les étapes suivantes :
transmission d'une demande d'enregistrement (203) par un terminal de communication (202) à une entité d'accès réseau (251) du réseau de communication (240) visité via une première interface de communication (N1) dédiée, préinstallée entre le terminal de communication (202) et l'entité d'accès réseau (251), ladite demande d'enregistrement (203) comprenant une identification d'équipement d'utilisateur UE ID du terminal de communication (202) ;
appel de données d'enregistrement (206) spécifiques à l'abonné du terminal de communication (202) par l'entité d'accès réseau (251) via une deuxième interface de communication (B2) dédiée avec un réseau de communication de rattachement (210) du terminal de communication (202) pour la réception de données spécifiques à l'abonné du terminal de communication (202) provenant d'une base de données (230) du réseau de communication de rattachement (210) du terminal de communication (202) ou provenant d'une base de données externe sur la base de l'UE ID du terminal de communication (202),
où la deuxième interface de communication (B2) dédiée est spécialement prévue pour l'itinérance, et où l'entité d'accès réseau (251) du réseau de communication (240) visité est reliée via la deuxième interface de communication (B2) dédiée à la base de données (230) du réseau de communication de rattachement (210) du terminal de communication (202) ;
transmission de données d'accès au réseau (205) pour l'accès du terminal de communication (202) au réseau de communication (240) visité par l'entité d'accès réseau (251) au terminal de communication via la première interface de communication (N1) dédiée sur la base des données d'enregistrement (206) spécifiques à l'abonné du terminal de communication (202), lesdites données d'accès au réseau (205) indiquant des capacités du réseau de communication (240) visité ; et
établissement de la connexion itinérante par le terminal de communication (202) sur le réseau de communication (240) visité sur la base des données d'accès au réseau (205), ledit procédé étant exécuté dans un système comprenant le terminal de communication (202), le réseau de communication (240) visité et le réseau de communication de rattachement (210).

2. Procédé selon la revendication 1,
où les données d'accès au réseau (205) indiquent au moins une capacités suivantes du réseau de communication (240) visité :
la capacité de transmettre des données et/ou un langage,
le nombre et le type de tranches du réseau de communication (240) visité,
l'assistance à des fonctions de tranches de réseau définies,
l'assistance à l'itinérance 2G/3G, 4G et/ou 5G,
l'assistance à un service défini sur le réseau de communication (240) visité.

3. Procédé selon la revendication 1 ou la revendication 2, comprenant en outre :
la détermination d'un identifiant de réseau mobile terrestre PLMN ID du réseau de communication de rattachement (210) du terminal de communication (202) par l'entité d'accès réseau (251) sur la base de l'UE ID ; et
l'appel des données d'enregistrement (206) spécifiques à l'abonné du terminal de communication (202) sur la base du PLMN ID du réseau de communication de rattachement (210).

4. Procédé selon l'une des revendications précédentes, comprenant :
la détermination des données d'accès au réseau (205) sur la base d'une demande des capacités du réseau de communication (240) visité par l'entité d'accès réseau (251) auprès d'une base de données (260) du réseau de communication (240) visité.

5. Procédé selon la revendication 3 ou la revendication 4, comprenant :
la modification des données d'accès au réseau (205) sur la base des données d'enregistrement (206) spécifiques à l'abonné du terminal de communication (202) par l'entité d'accès réseau (251), et la transmission des données modifiées par l'entité d'accès réseau (251) au terminal de communication (202).

6. Procédé selon la revendication 5,
où les données modifiées indiquent une sélection des capacités du réseau de communication (240) visité sur la base des données d'enregistrement (206) spécifiques à l'abonné du terminal de communication (202).

7. Procédé selon la revendication 5 ou la revendication 6,
où les données modifiées indiquent au terminal de communication (202) quelles capacités du réseau de communication (240) visité sont appropriées au terminal de communication (202).

8. Procédé selon l'une des revendications précédentes :
où l'interface de communication (N1) dédiée comprend une interface N1 d'un réseau central 5G entre le terminal de communication (202) et l'entité d'accès réseau (251) ; et
où l'entité d'accès réseau (251) comprend une entité AMF du réseau central 5G.

9. Procédé selon l'une des revendications précédentes,
où l'appel des données d'enregistrement (206) spécifiques à l'abonné du terminal de communication (202) par l'entité d'accès réseau (251) est effectué en réaction à la demande d'enregistrement (203) provenant du terminal de communication (202) ou lors de l'initialisation de l'entité d'accès réseau (251).

10. Procédé selon l'une des revendications précédentes,
où la demande d'enregistrement (203) comprend en outre une identification d'un service spécifique demandé par le terminal de communication (202) auprès du réseau de communication (240) visité ; et comprenant en outre :
la fourniture du service spécifique par le réseau de communication (240) visité sur la base de l'identification du service spécifique, si le réseau de communication (240) visité assiste le service spécifique ; et
la transmission d'un PLMN ID d'un autre réseau de communication assistant le service spécifique par l'entité d'accès réseau (251) au terminal de communication (202), si le réseau de communication (240) visité n'assiste pas le service spécifique.

11. Procédé selon l'une des revendications précédentes,
où la demande d'enregistrement (203) comprend une clé pour l'authentification du terminal de communication (202).

12. Procédé selon la revendication 11, comprenant :
l'authentification du terminal de communication (202) par l'entité d'accès réseau (251) au moyen d'une entité d'authentification (231) du réseau de communication de rattachement (210) sur la base de la clé pour l'authentification du terminal de communication (202) avant l'appel des données d'enregistrement (206) spécifiques à l'abonné.

13. Entité d'accès réseau (251) d'un réseau de communication (240) visité pour l'établissement d'une connexion itinérante entre un terminal de communication (202) et le réseau de communication (240) visité, ladite entité d'accès réseau (251) comprenant :
une première interface de communication (N1) dédiée avec le terminal de communication (202), préinstallée entre le terminal de communication (202) et l'entité d'accès réseau (251), pour la réception d'une demande d'enregistrement (203) provenant du terminal de communication (202), ladite demande d'enregistrement (203) comprenant une identification d'équipement d'utilisateur UE ID du terminal de communication (202), et pour l'établissement de la connexion itinérante par le terminal de communication (202) sur le réseau de communication (240) visité sur la base des données d'accès au réseau (205) ;
une deuxième interface de communication (B2) dédiée avec un réseau de rattachement (210) du terminal de communication (202) pour la réception de données (206) spécifiques à l'abonné du terminal de communication (202) et pour l'établissement de la connexion itinérante par le terminal de communication (202) sur le réseau de communication (240) visité sur la base des données d'accès au réseau (205),
où la deuxième interface de communication (B2) dédiée est spécialement prévue pour l'itinérance, et où l'entité d'accès réseau (251) est reliée via la deuxième interface de communication (B2) dédiée à une base de données (230) du réseau de rattachement (210) du terminal de communication (202) ; et
un processeur (301), prévu pour déterminer des données d'accès au réseau (205) pour l'accès du terminal de communication (202) au réseau de communication (240) visité sur la base des données (206) spécifiques à l'abonné du terminal de communication (202), et transmettre celles-ci au terminal de communication (202) sur la base de l'UE ID du terminal de communication (202), les données d'accès au réseau (205) indiquant des capacités du réseau de communication (240) visité.

14. Entité d'accès réseau (251) selon la revendication 13,
où les données d'accès au réseau (205) indiquent au moins une capacités suivantes du réseau de communication (240) visité :
la capacité de transmettre des données et/ou un langage,
le nombre et le type de tranches du réseau de communication (240) visité,
l'assistance à des fonctions de tranches de réseau définies,
l'assistance à l'itinérance 2G/3G, 4G et/ou 5G,
l'assistance à un service défini sur le réseau de communication (240) visité.
